# EUROPÄISCHE PATENTSCHRIFT

(11) **EP 4 025 454 B1**
(45) Veröffentlichungstag und Bekanntmachung des Hinweises auf die Patenterteilung: **30.09.2026**
(21) Anmeldenummer: 20760428.1
(22) Anmeldetag: 19.08.2020
(51) Int. Cl.: B60L 53/16, B60L 53/34, H01R 13/52, H02G 15/013, H01R 13/502

(54) **STECKERVERBINDER**
PLUG CONNECTOR
CONNECTEUR À FICHE

(30) Priorität: 02.09.2019 DE 102019123425
(43) Veröffentlichungstag der Anmeldung: 13.07.2022
(73) Patentinhaber: Phoenix Contact e-Mobility GmbH, 32816 Schieder-Schwalenberg (DE)
(72) Erfinder: FÜHRER, Thomas, 32825 Blomberg (DE)
(86) Internationale Anmeldenummer: PCT/EP2020/073149
(87) Internationale Veröffentlichungsnummer: WO 2021/043571

(56) Entgegenhaltungen:
- EP-A1- 1 883 135
- EP-A1- 2 112 721
- CN-U- 209 071 709
- CN-U- 209 071 709
- DE-A1- 102009 003 016
- DE-A1- 2 835 832
- DE-A1- 2 835 832
- DE-C2- 2 835 832
- DE-U1- 202006 019 791
- DE-U1- 202006 019 791
- DE-U1- 202006 019 791

## Beschreibung

Die Erfindung betrifft einen Steckverbinder zum Laden eines Elektrofahrzeugs.

Im Bereich der Elektromobilität bestehen für Steckverbinder, die auch als Ladesteckverbinder bezeichnet werden, höchste Anforderungen hinsichtlich ihrer Stabilität und Sicherheit.

Eine mögliche Gefahrenquelle sind hierbei z.B. diejenigen Baugruppen, welche Hochspannungen von bis zu 1000 Volt führen und erheblichen Witterungs- und Umwelteinflüssen ausgesetzt sind. So besteht das Risiko, das sich, z.B. durch geringfügige Beschädigungen der Gehäusebauteile und/oder Dichtungen, Undichtigkeiten ergeben, die einen Zutritt von Flüssigkeit bzw. Feuchtigkeit in das Innere des Steckverbinders ermöglichen.

Diese Feuchtigkeit kann verschiedene, vor allem chemische und auch, bei Berührung mit spannungsführenden Teilen, elektrochemische Effekte bewirken, welche die elektrische Isolation maßgeblich verschlechtern können. Es kann demnach zu einem Versagen der Isolation im Ladesteckverbinder kommen, z.B. durch Lichtbogenbildung. Es kann hierdurch zu einer Gefahr für den Benutzer des Steckverbinders oder einer Beschädigung des Steckverbinders kommen.

Steckverbinder bzw. Ladesteckverbinder befinden sich häufig an Ladeeinrichtungen, die im Freien stehen. Bei dauerhafter Beregnung tritt das Problem auf, das sowohl das Ladekabel als auch der angeschlossene Ladesteckverbinder dem Regenwasser ausgesetzt sind. In der Regel befindet sich an einer Ladeeinrichtung eine geeignete Aufnahme bzw. Parkposition für den Ladesteckverbinder, welche einen Schutz für den Steckverbinder darstellt, wenn keine Ladung erfolgt. Das Regenwasser kann, soweit der Ladesteckverbinder ordnungsgemäß in der Aufnahme angeordnet ist, nach unten am Kabel entlanglaufen und abtropfen.

Die Praxis zeigt, dass Benutzer den Steckverbinder oft nicht wieder in die dafür vorgesehene Parkposition bringen, sondern z.B. das Kabel einfach über die Ladeeinrichtung hängen. Hierbei hängt der Ladestecker frei am Kabel nach unten. Der Kabeleinlass des Steckverbindergehäuses, welcher sich in aller Regel an der Unterseite des Steckers befindet, kommt somit nach oben zu liegen und Regenwasser kann am Kabel entlang direkt auf die Kabeldichtung fließen. Je nach Kontur der Dichtung oder des Gehäuses kann sich ein mehr oder minder großes Volumen stehenden Wassers über der Dichtung des Kabeleinlasses ansammeln, welches die Dichtung ggf. überwinden und in das Gehäuse eindringen kann. Hierdurch kann es zu den voranstehend bereits genannten Gefahren und Defekten aufgrund eindringender Feuchtigkeit kommen.

Bei kleinen und leichten AC-Ladesteckverbindern ist es üblich das Ladekabel auf eine Kabelaufnahme zu wickeln und den Steckbinder frei hängen zu lassen. Auch hier kann es zu der voranstehend beschriebenen Wasseransammlungen im Bereich der Dichtung der Kabeldurchführung kommen.

Bei DC-Ladeeinrichtungen mit schweren Ladekabeln gibt es wiederum Konzepte, welche das Ladekabel nach oben aus dem Gehäuse der Ladeeinrichtung herausführen, was für die Kabeldurchführung in das Gehäuse ebenfalls zu der zuvor beschriebenen Situation der unmittelbaren Beregnung der Dichtung und einer damit einhergehenden Wasseransammlung führen kann.

In EP1883135A1 wird ein Ladestecker beschrieben, der zwischen Kabel und Schutzkappe des Steckers eine Dichtung aufweist. Es wird jedoch nicht offenbart, wie Wasser an der Dichtung effizient abgeführt werden kann.

Die Dokumente CN209071709U, DE2835832C2 und DE102009003016A1 beschreiben ebenfalls Ladestecker mit Dichtungen. Sie ziele jedoch darauf ab, dass durch die Dichtung kein Wasser in das Gehäuseinnere des Steckers eindringen kann.

Der Erfindung liegt daher die Aufgabe zu Grunde, einen Steckverbinder anzugeben, der im Bereich der Kabeldurchführung eine verbesserte Dichtigkeit für jedwede räumliche Orientierung des Steckverbinders ermöglicht.

Die Aufgabe wird erfindungsgemäß mit den Merkmalen des unabhängigen Anspruchs gelöst. Zweckmäßige Ausgestaltungen und vorteilhafte Weiterbildungen der Erfindung sind in den Unteransprüchen angegeben.

Die Erfindung betrifft einen Steckverbinder zum Laden eines Elektrofahrzeugs, mit einem Gehäuse, das einen Gehäuseinnenraum begrenzt, mit einem Kabel, das durch eine Öffnung des Gehäuses in den Gehäuseinnenraum geführt ist, mit einer Dichtung, die zum Abdichten des Gehäuseinnenraums zwischen dem Kabel und dem Gehäuse angeordnet ist, wobei die Dichtung eine das Kabel umschließende und an dem Kabel anliegende Dichtlippe aufweist und wobei die Dichtung einen das Kabel umschließenden und an dem Gehäuse anliegenden Dichtsteg aufweist.

Die Dichtlippe ermöglicht ein Vermeiden oder Reduzieren von Wasseransammlungen im Bereich der Dichtung, so dass Regenwasser für jede Orientierung des Steckverbinders abfließen kann. Gegenüber dem Dichtsteg, der gegen das Gehäuse abdichtet, weist die Dichtlippe aufgrund ihrer Formgebung bevorzugt eine größere Elastizität auf als der Dichtsteg, wodurch sich die Dichtlippe besonders gut an das Kabel anlegen bzw. anschmiegen kann, um eine hohe Dichtigkeit ausbilden zu können. Insbesondere kann die Dichtlippe eine geringere Wandstärke aufweisen als der Dichtsteg, so dass die Dichtlippe eine größere Elastizität aufweisen kann als der Dichtsteg.

Wenn vorliegend von einem Steckverbinder bzw. Ladesteckverbinder gesprochen wird, so handelt es sich dabei beispielsweise um einen genormten Ladesteckverbinder gemäß IEC 62196, SAE J1772 oder GB/T 20234-2015.

Die Dichtung kann eine Elastomerdichtung sein. Die Dichtung ist demnach insbesondere elastisch verformbar und legt sich spaltfrei an eine betreffende Gegenkontur an, um den Gehäuseinnenraum dichtend abzuschließen.

Die Dichtung kann ein Dichtring mit einer Durchgangsöffnung zur Kabeldurchführung sein, so dass die Dichtung auf das Kabel aufgeschoben bzw. das Kabel durch die Durchgangsöffnung der Dichtung durchgesteckt sein kann.

Die Dichtlippe kann eine Wanddicke von 1 cm oder weniger aufweisen. Die Dichtlippe kann in einem an dem Kabel anliegenden Endabschnitt eine Wanddicke von 0,5 cm oder weniger aufweisen. Es kann vorgesehen sein, dass die Dichtlippe in einem an dem Kabel anliegenden Endabschnitt verjüngt ist, insbesondere eine Wanddicke von 0,5 cm oder weniger aufweist, insbesondere 0,3 cm oder weniger aufweist. Auf diese Weise können besonders effektiv Wasseransammlungen vermieden werden.

Um Wasseransammlungen zu vermeiden, kann es weiter vorgesehen sein, dass die Dichtlippe eine konische Form hat, die das Abfließen von Wasser begünstigt.

Die Dichtung kann eine zweite Dichtlippe aufweisen, die das Kabel umschließt und an dem Kabel anliegt, um die Abdichtung weiter zu verbessern. Es kann vorgesehen sein, dass die zweite Dichtlippe in einem an dem Kabel anliegenden Endabschnitt verjüngt ist. So kann auch die zweite Dichtlippe dazu eingerichtet sein, Wasseransammlungen in einem an das Kabel angrenzenden Bereich der Dichtlippe zu vermeiden.

Die zweite Dichtlippe kann eine Wanddicke von 1 cm oder weniger aufweisen. Die zweite Dichtlippe kann in einem an dem Kabel anliegenden Endabschnitt eine Wanddicke von 0,5 cm oder weniger aufweisen. Es kann vorgesehen sein, dass die Dichtlippe in einem an dem Kabel anliegenden Endabschnitt verjüngt ist, insbesondere eine Wanddicke von 0,5 cm oder weniger aufweist, insbesondere 0,3 cm oder weniger aufweist. Auf diese Weise können besonders effektiv Wasseransammlungen vermieden werden.

Die erste und die zweite Dichtlippe können einen Abstand zueinander aufweisen, so dass die erste Dichtlippe eine erste Feuchtigkeitsbarriere bzw. Dichtstelle bildet und die zweite Dichtlippe eine dazu beabstandete, zweite Feuchtigkeitsbarriere bzw. Dichtstelle bildet.

Um Wasseransammlungen zu vermeiden, kann es vorgesehen sein, dass die zweite Dichtlippe eine konische Form hat.

Es kann vorgesehen sein, dass der Dichtsteg einen Dichtwulst oder mehrere Dichtwülste hat.

Ein solcher Dichtwulst kann zur definierten Anlage des Dichtstegs an einer zugeordneten Gehäusewandung dienen.

Ein Dichtwulst kann ringförmig bzw. kreisrund umlaufend gebildet sein und an einer zugeordneten kreiszylindrischen oder konischen Gehäusefläche bzw. Wandung des Gehäuses anliegen.

Es kann vorgesehen sein, dass der erste Dichtsteg zwei zueinander beabstandete Dichtwülste hat. Es kann vorgesehen sein, dass der erste Dichtsteg drei, vier oder mehr zueinander beabstandete Dichtwülste hat.

Gemäß einer Ausgestaltung des Steckverbinders kann es vorgesehen sein, dass der Dichtsteg an dem Kabel anliegt. So ist der Bereich zwischen dem Kabel und dem Gehäuse einerseits durch die Dichtlippe und andererseits durch den Dichtsteg abgedichtet.

Der erste Dichtsteg kann einen Dichtwulst oder mehrere Dichtwülste haben, die an dem Kabel anliegen. Es kann vorgesehen sein, dass der erste Dichtsteg zwei zueinander beabstandete Dichtwülste hat, die an dem Kabel anliegen. Es kann vorgesehen sein, dass der erste Dichtsteg drei, vier oder mehr zueinander beabstandete Dichtwülste hat, die an dem Kabel anliegen.

Der erste Dichtsteg kann wenigstens einen Dichtwulst habe, der an dem Kabel anliegt und zudem wenigstens einen Dichtwulst haben, der an dem Gehäuse anliegt.

Es kann vorgesehen sein, dass die Dichtung einen zweiten Dichtsteg aufweist, wobei der zweite Dichtsteg einen Dichtwulst oder mehrere Dichtwülste haben kann. Auch hier dienen der Dichtwulst bzw. die Dichtwülste dazu, eine definierte Anlage der Dichtung an dem Gehäuse zu erzeugen, um eine zuverlässige Abdichtung zu erreichen.

Wenn vorliegend davon gesprochen wird, dass die Dichtlippe oder der Dichtsteg an dem Kabel anliegen, so bedeutet dies, dass die Dichtlippe und der Dichtsteg insbesondere an einer isolierenden Ummantelung des Kabels anliegen, welche stromführende Adern bzw. Litzen des Kabels umfangsseitig einfasst.

Die Dichtung kann eine Ausnehmung haben, in die ein Steg des Gehäuses eingreift.

Insbesondere kann es vorgesehen sein, dass die Dichtung formschlüssig an dem Gehäuse gehalten ist. So kann eine definierte Position der Dichtung relativ zu dem Gehäuse festgelegt sein.

Alternativ oder ergänzend kann es vorgesehen sein, dass das Gehäuse eine Ausnehmung hat, in die ein Dichtsteg der Dichtung eingreift. So kann durch die Anordnung des Dichtstegs in einer Ausnehmung des Gehäuses gewährleistet werden, dass eine definierte Anlage zwischen Dichtung und Gehäuse gebildet ist. Weiter kann durch das wechselseitige Eingreifen der Dichtung bzw. des Gehäuses in zugeordnete Ausnehmungen eine zusätzliche Anzahl von Dichtstellen realisiert werden, um die Abdichtung gegenüber einem Eindringen von Wasser zu verbessern.

Es kann vorgesehen sein, dass der erste Dichtsteg und der zweite Dichtsteg diejenige Ausnehmung begrenzen, in die der Steg des Gehäuses eingreift, wobei der erste und der zweite Dichtsteg jeweils an dem Steg des Gehäuses anliegen, der in die Ausnehmung der Dichtung eingreift.

Um die Dichtung vor Umgebungseinflüssen zu schützen, ist vorgesehen, dass der Steckverbinder eine Schutzkappe hat, die die Dichtung abdeckt, wobei die Schutzkappe mit dem Gehäuse verbunden ist. Die Schutzkappe kann über die Dichtung gestülpt sein, um die Dichtung abzudecken.

Es kann vorgesehen sein, dass die Schutzkappe mithilfe von Rasthaken mit dem Gehäuse verrastet ist, um eine einfache und kostengünstige lösbare Verbindung bereitzustellen.

Es kann vorgesehen sein, dass die Schutzkappe mit dem Gehäuse verschraubt oder in anderer Art und Weise lösbar verbunden ist. Alternativ kann es vorgesehen sein, dass die Schutzkappe nicht zerstörungsfrei lösbar mit dem Gehäuse verbunden ist, beispielsweise verklebt, verschweißt oder vernietet ist.

Erfahrungsgemäß ist vorgesehen, dass die Schutzkappe in einem Bereich oder in mehreren Bereichen an der Dichtung anliegt, um die Dichtung zuverlässig in der vorgesehenen Position zu halten und eine definierte Anlage der Dichtung an dem Gehäuse und dem Kabel zu bewirken.

Beispielsweise kann es vorgesehen sein, dass an der Dichtung und/oder an der Schutzkappe Formelemente gebildet sind, wie Noppen oder dergleichen, um eine definierte Anlage zwischen der Dichtung und der Schutzkappe zu erreichen. Beispielsweise kann es vorgesehen sein, dass die Dichtung Noppen hat, die in zugeordnete Aufnahmen der Schutzkappe aufgenommen sind.

Die Schutzkappe kann einen Kunststoff aufweisen oder aus einem Kunststoff bestehen, wobei die Schutzkappe einteilig bzw. einstückig gebildet sein kann.

Die Dichtung kann einteilig bzw. einstückig gebildet sein.

Zwischen der Schutzkappe und der Dichtung können eine Ablauföffnung oder mehrere Ablauföffnungen zum Abführen von Flüssigkeiten vorgesehen sein. So kann zwischen der Schutzkappe und dem Kabel in Richtung der Dichtung eintretendes Wasser zuverlässig abgeleitet werden, um ein Eindringen von Flüssigkeit in das Gehäuse des Steckverbinders zu vermeiden.

Nachfolgend wird die Erfindung unter Bezugnahme auf die anliegenden Zeichnungen näher erläutert.

Es zeigen jeweils schematisch
- Fig. 1: einen erfindungsgemäße Steckverbinder in einer perspektivischen Ansicht von oben in einer aufrechten Position,
- Fig. 2: den Steckverbinder aus Fig. 1 in einer Seitenansicht in einer nach unten hängenden Position,
- Fig. 3: einen ersten Querschnitt des Ausschnitts III aus Fig. 2,
- Fig. 4: eine Dichtung des Steckverbinders in einem Querschnitt,
- Fig. 5: einen zweiten Querschnitt des Ausschnitts III aus Fig. 2,
- Fig. 6: einen dritten Querschnitt des Ausschnitts III aus Fig. 2,
- Fig. 7a: die Dichtung aus Fig. 4 in einer Seitenansicht,
- Fig. 7b: die Dichtung aus Fig. 4 in einer perspektivischen Ansicht,
- Fig. 7c: die Dichtung aus Fig. 4 in einer weiteren perspektivischen Ansicht,
- Fig. 8a: eine Schutzkappe des Steckverbinders in einem Querschnitt,
- Fig. 8b: die Schutzkappe aus Fig. 8a in einer perspektivischen Ansicht,
- Fig. 8c: die Schutzkappe aus Fig. 8a in einer weiteren perspektivischen Ansicht,
- Fig. 9: den Steckverbinder aus Fig. 1 in perspektivischer Ansicht und in einer nach unten hängenden Position mit Teilen der Kabeldurchführung in Explosionsdarstellung.

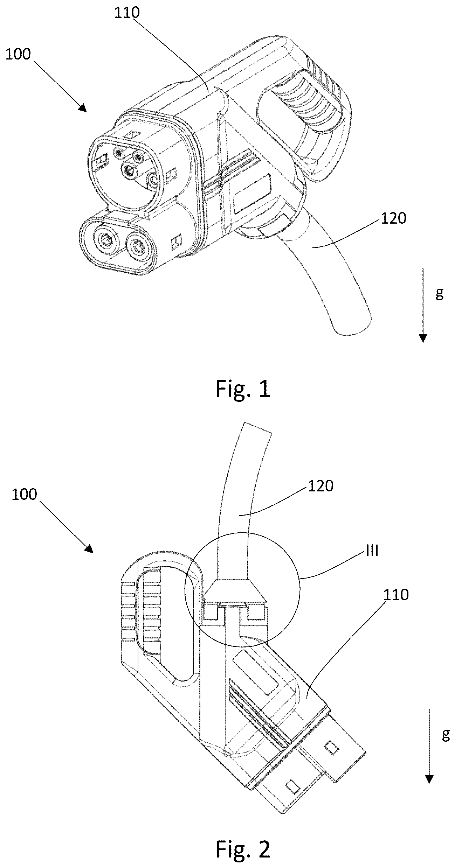

Fig. 1 und Fig. 2 zeigen einen Steckverbinder 100 zum Laden eines Elektrofahrzeugs, mit einem Gehäuse 110 und mit einem Kabel 120. Der Steckverbinder 100 ist ein genormter Ladesteckverbinder 110 gemäß IEC 62196. Um die räumliche Orientierung des Steckverbinders 100 und seiner Komponenten für die einzelnen Darstellungen zu veranschaulichen, ist jeweils die Erdbeschleunigung g in den Figuren eingezeichnet.

In Fig. 1 befindet sich der Steckverbinder 100 in seiner vorgesehenen, aufrechten Orientierung, wobei das Kabel 120 nach unten, also im Wesentlichen in Richtung von g, weggeführt ist. Soweit der Steckverbinder 100 einer Beregnung ausgesetzt ist, läuft das Regenwasser entlang des Kabels 120 nach unten ab.

In der in Fig. 2 dargestellten Orientierung des Steckverbinders 100 hängt das Gehäuse 110 an dem Kabel 120 nach unten. Hierzu kommt es z.B., falls der Steckverbinder, statt in eine vorgesehene Aufnahme eingesetzt zu werden, mit seinem Kabel über ein Gehäuse einer Ladestation gelegt wird. Soweit der Steckverbinder 100 in dieser Position einer Beregnung ausgesetzt ist, läuft das Regenwasser entlang des Kabels 120 nach unten in Richtung des Steckverbindergehäuses 110.

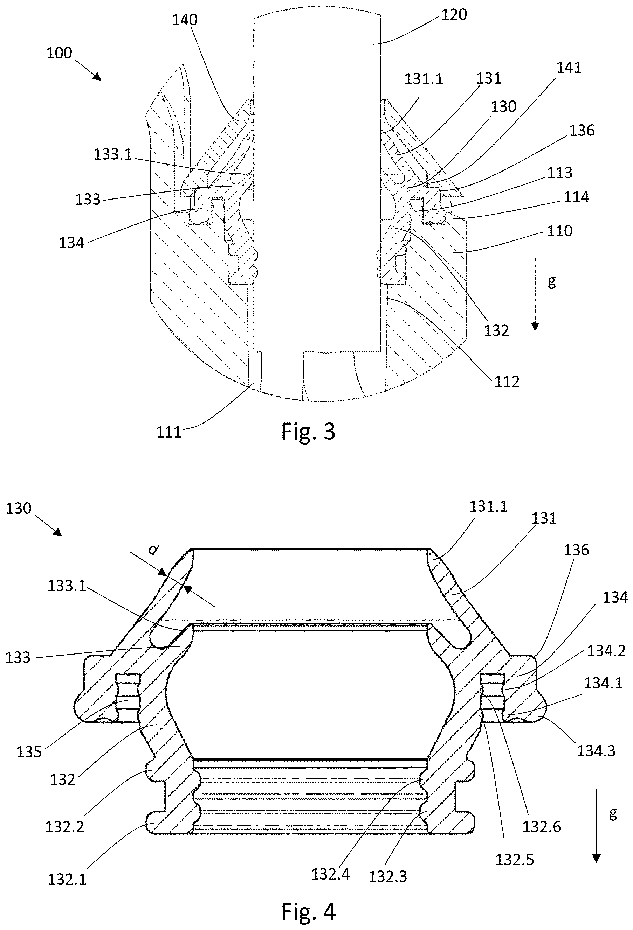

Fig. 3 zeigt einen ersten Querschnitt eines Ausschnitts III gemäß Fig. 2.

Das Gehäuse 110 begrenzt einen Gehäuseinnenraum 111. Das Kabel 120 ist durch eine Öffnung 112 des Gehäuses 110 in den Gehäuseinnenraum 111 geführt.

Der Steckverbinder hat eine Dichtung 130, die zum Abdichten des Gehäuseinnenraums 111 zwischen dem Kabel 120 und dem Gehäuse 110 angeordnet ist.

Die Dichtung 130 weist eine das Kabel 120 umschließende und an dem Kabel 120 anliegende erste Dichtlippe 131 auf. Die erste Dichtlippe 131 ist in einem an dem Kabel 120 anliegenden Endabschnitt 131.1 der Dichtlippe 131 verjüngt. Die Dichtlippe 131 verhindert durch ihre schmale Form Wasseransammlungen im Bereich ihres Endabschnitts 131.1, so dass Regenwasser entlang der Dichtung 130 abfließen kann.

Eine Wandstärke d der Dichtlippe 130 beträgt vorliegend weniger als 1 cm (Fig. 4), wobei der Endabschnitt 131.1 auf eine Wandstärke von weniger als 0,5 cm verjüngt ist.

Die Dichtung 130 weist einen das Kabel 120 umschließenden und an dem Gehäuse 110 anliegenden ersten Dichtsteg 132 auf.

Die Dichtung 130 weist eine zweite Dichtlippe 133 auf, die das Kabel 120 umschließt und an dem Kabel 120 anliegt, wobei die zweite Dichtlippe 133 in einem an dem Kabel 120 anliegenden Endabschnitt 133.1 verjüngt ist.

Die Dichtlippen 131, 133 sind jeweils konisch geformt.

Der erste Dichtsteg 132 hat sechs ringförmige bzw. kreisrund umlaufende Dichtwülste 132.1, 132.2, 132.4, 132.5, 132.6 (Fig. 4).

Der erste Dichtsteg 132 liegt mit seinen Dichtwülsten 132.1, 132.2, 132.5 und 132.6 an dem Gehäuse 110 an.

Der erste Dichtsteg 132 liegt mit seinen Dichtwülsten 132.3 und 132.4 an dem Kabel 120 an.

Die Dichtung 130 weist einen zweiten Dichtsteg 134 auf. Der zweite Dichtsteg 134 hat drei ringförmige bzw. kreisrund umlaufende Dichtwülste 134.1, 134.2, 134.3.

Die Dichtung 130 hat eine Ausnehmung 135 (Fig. 4), in die ein Steg 113 des Gehäuses 110 eingreift (Fig. 3).

Das Gehäuse 110 hat eine Ausnehmung 114, in die der zweite Dichtsteg 134 der Dichtung 130 eingreift.

Der erste Dichtsteg 132 und der zweite Dichtsteg 134 begrenzen die Ausnehmung 135 und liegen an dem Steg 113 des Gehäuses 110 an.

Der Steckverbinder 100 hat eine Schutzkappe 140, die die Dichtung 130 abdeckt, wobei die Schutzkappe 140 mit dem Gehäuse 110 verbunden ist. Die Schutzkappe 140 hat eine konische Form.

Die Schutzkappe 140 liegt in mehreren Bereichen an der Dichtung 130 an. So hat die Schutzkappe 140 Formelemente 141, die korrespondierende Formelemente 136 der Dichtung 130 aufnehmen, um die Dichtung 130 in Position zu halten.

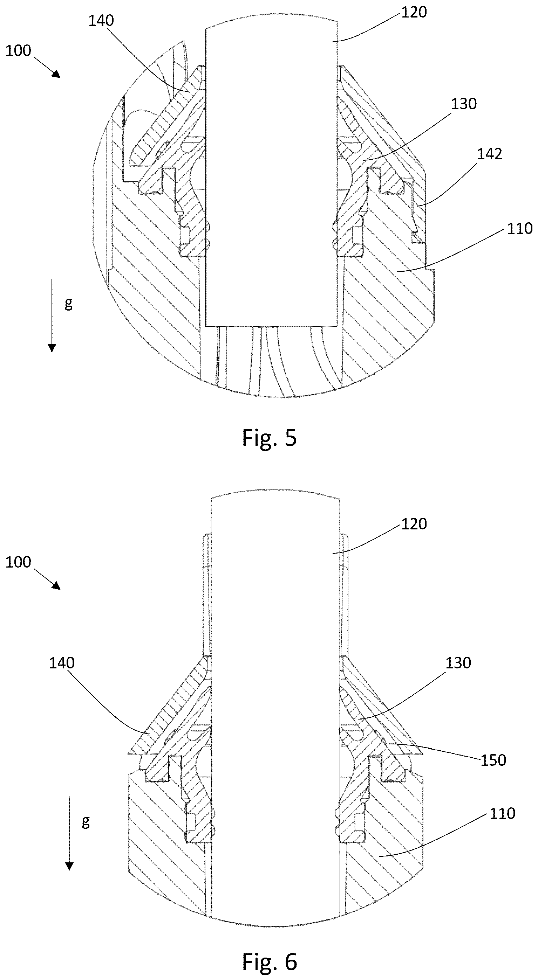

Figur 5 zeigt einen zweiten Querschnitt eines Ausschnitts III gemäß Fig. 2, der durch einen Rasthaken 142 der Schutzkappe 140 verläuft, mit dem die Schutzkappe 140 an dem Gehäuse 110 verrastet ist.

Figur 6 zeigt einen dritten Querschnitt eines Ausschnitts III gemäß Fig. 2, der zu den Rasthaken 142 und dem Formelementen 141 der Schutzkappe 140 versetzt verläuft. Zwischen der Schutzkappe 140 und der Dichtung 130 ist eine Ablauföffnung 150 bzw. Durchgangsöffnung 150 gebildet, die ein Abfließen von zwischen dem Kabel 120 und der Schutzkappe 140 eintretendem Wasser ermöglicht.

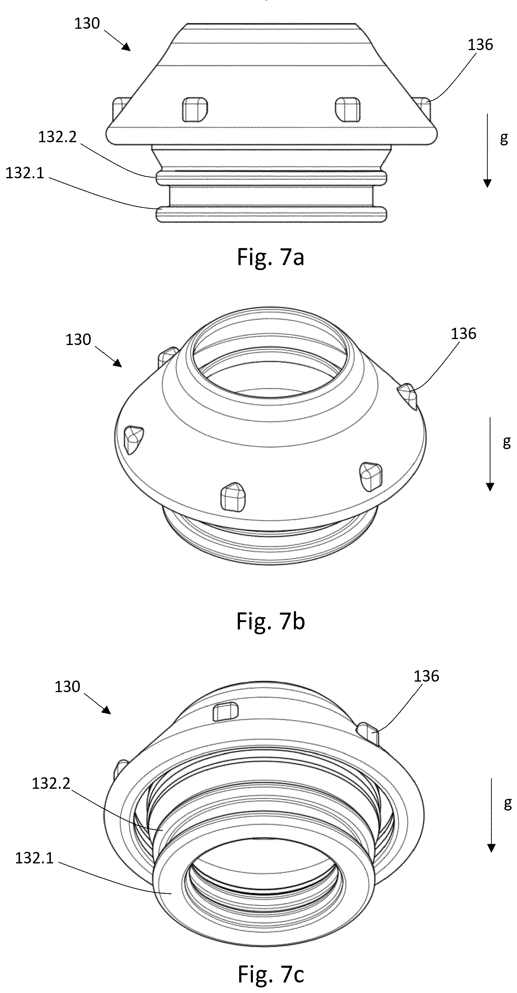

Die Figuren 7a, 7b und 7c zeigen die Dichtung 130 für sich genommen, in einer Seitenansicht und in zwei perspektivischen Ansichten. Die Dichtung 130 ist hier in Form eines Dichtrings ausgebildet, der aus einem Elastomer ausgebildet ist. Die Formelemente 136 sind in äquidistanten Winkelabständen verteilt angeordnet, wobei der Dichtring 130 eine zyklisch symmetrische Form hat.

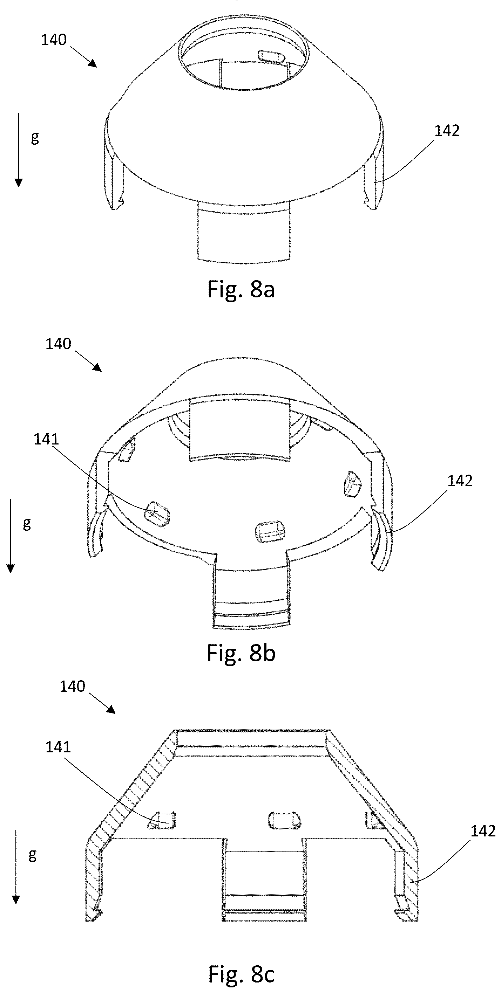

Die Figuren 8a, 8b und 8c zeigen die Schutzkappe 140 für sich genommen in zwei perspektivischen Ansichten und einer Schnittansicht. Die Schutzkappe 140 besteht aus einem Kunststoff. Die Formelemente 141 sind in äquidistanten Winkelabständen verteilt angeordnet. Die Rasthaken 142 sind in äquidistanten Winkelabständen verteilt angeordnet.

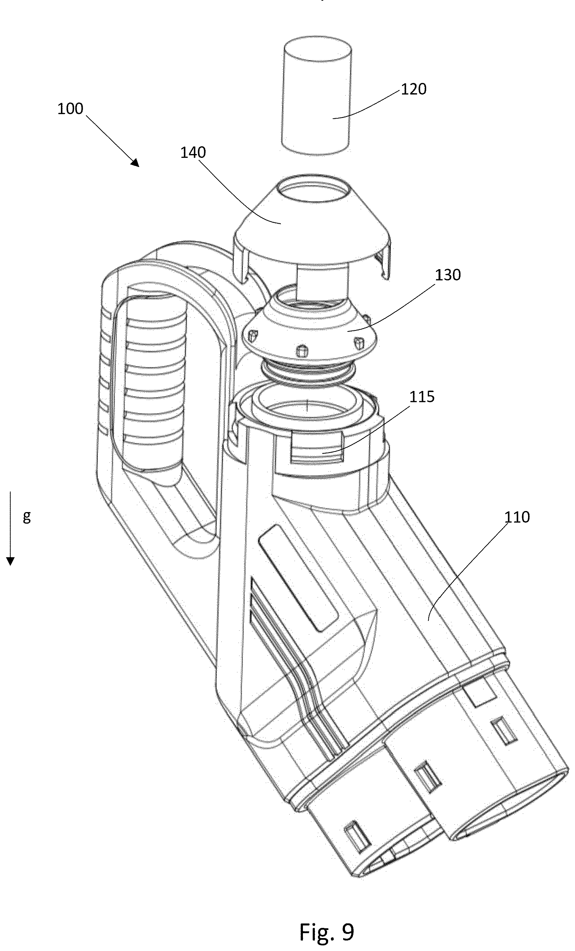

Fig. 9 zeigt eine Explosionsdarstellung der Komponenten der Kabeldurchführung des Steckverbinders 100, mit dem Kabel 120, der Schutzkappe 140 und der Dichtung 130. An dem Gehäuse 110 sind Rastnuten 115 vorgesehen, die zur Aufnahme der Rasthaken 142 der Schutzkappe 140 dienen.

### Bezugszeichenliste

- 100: Steckverbinder
- 110: Gehäuse / Steckverbindergehäuse
- 111: Innenraum
- 112: Öffnung
- 113: Steg
- 114: Ausnehmung
- 115: Rastnut
- 120: Kabel
- 130: Dichtung
- 131: erste Dichtlippe
- 131.1: verjüngter Endabschnitt
- 132: Dichtsteg
- 132.1: Wulst
- 132.2: Wulst
- 132.3: Wulst
- 132.4: Wulst
- 132.5: Wulst
- 132.6: Wulst
- 133: zweite Dichtlippe
- 133.1: verjüngter Endabschnitt
- 134: zweiter Dichtsteg
- 134.1: Wulst
- 134.2: Wulst
- 134.3: Wulst
- 135: Ausnehmung
- 136: Formelement / Noppen
- 140: Schutzkappe
- 141: Formelement
- 142: Rasthaken
- 150: Ablauföffnung
- d: Wanddicke

## Patentansprüche

1. Steckverbinder zum Laden eines Elektrofahrzeugs, mit einem Gehäuse (110), das einen Gehäuseinnenraum (111) begrenzt, mit einem Kabel (120), das durch eine Öffnung (112) des Gehäuses (110) in den Gehäuseinnenraum (111) geführt ist, mit einer Dichtung (130), die zum Abdichten des Gehäuseinnenraums (111) zwischen dem Kabel (120) und dem Gehäuse (110) angeordnet ist, wobei die Dichtung (130) eine das Kabel (120) umschließende und an dem Kabel (120) anliegende Dichtlippe (131) aufweist, wobei die Dichtung (130) einen das Kabel (120) umschließenden und an dem Gehäuse (110) anliegenden Dichtsteg (132) aufweist, und wobei eine Schutzkappe (140) vorgesehen ist, die die Dichtung (130) abdeckt, wobei die Schutzkappe (140) mit dem Gehäuse (110) verbunden ist, **dadurch gekennzeichnet, dass** zwischen der Schutzkappe (140) und der Dichtung (130) eine Ablauföffnung (150) oder mehrere Ablauföffnungen zum Abführen von Flüssigkeiten gebildet sind.

2. Steckverbinder nach Anspruch 1, **dadurch gekennzeichnet, dass** die Dichtlippe (131, 133) in einem an dem Kabel (120) anliegenden Endabschnitt (131.1, 133.1) verjüngt ist.

3. Steckverbinder nach einem der voranstehenden Ansprüche, **dadurch gekennzeichnet, dass** die Dichtung (130) eine zweite Dichtlippe (131, 133) aufweist, die das Kabel (120) umschließt und an dem Kabel anliegt (120), insbesondere, dass die zweite Dichtlippe (131, 133) in einem an dem Kabel (120) anliegenden Endabschnitt (131.1, 133.1) verjüngt ist.

4. Steckverbinder nach einem der voranstehenden Ansprüche, **dadurch gekennzeichnet, dass** der Dichtsteg (132) einen Dichtwulst oder mehrere Dichtwülste (132.1, 132.2, 132.3, 132.4, 132.5, 132.6) hat.

5. Steckverbinder nach einem der voranstehenden Ansprüche, **dadurch gekennzeichnet, dass** der Dichtsteg (132) an dem Kabel (120) anliegt.

6. Steckverbinder nach einem der voranstehenden Ansprüche, **dadurch gekennzeichnet, dass** die Dichtung (130) einen zweiten Dichtsteg (134) aufweist, insbesondere, dass der zweite Dichtsteg (134) einen Dichtwulst oder mehrere Dichtwülste (134.1, 134.2, 134.3) hat.

7. Steckverbinder nach einem der voranstehenden Ansprüche, **dadurch gekennzeichnet, dass** die Dichtung (130) eine Ausnehmung (135) hat, in die ein Steg (113) des Gehäuses (110) eingreift und/oder dass das Gehäuse (110) eine Ausnehmung (114) hat, in die ein Dichtsteg (134) der Dichtung (130) eingreift.

8. Steckverbinder nach Anspruch 6 und Anspruch 7, **dadurch gekennzeichnet, dass** der Dichtsteg (132) und der zweite Dichtsteg (134) die Ausnehmung (135) begrenzen und an dem Steg (114) des Gehäuses (110) anliegen.

9. Steckverbinder nach einem der Ansprüche 1 bis 8, **dadurch gekennzeichnet, dass** die Schutzkappe (140) in einem Bereich oder in mehreren Bereichen an der Dichtung (130) anliegt.

## Claims

1. Plug connector for charging an electric vehicle, comprising a housing (110) defining a housing interior (111), a cable (120) which is guided through an opening (112) of the housing (110) into the housing interior (111), a seal (130) which is arranged to seal the housing interior (111) between the cable (120) and the housing (110), wherein the seal (130) comprises a sealing lip (131) which surrounds the cable (120) and bears against the cable (120), wherein the seal (130) comprises a sealing rib (132) which surrounds the cable (120) and bears against the housing (110), and wherein a protective cap (140) is provided which covers the seal (130), wherein the protective cap (140) is connected to the housing (110), **characterized in that** between the protective cap (140) and the seal (130) a drain opening (150) or a plurality of drain openings are formed for discharging liquids.

2. Connector according to claim 1, **characterized in that** the sealing lip (131, 133) is tapered in an end section (131.1, 133.1) abutting the cable (120).

3. Connector according to any one of the preceding claims, **characterized in that** the seal (130) comprises a second sealing lip (131, 133) which surrounds the cable (120) and bears against the cable (120), in particular **in that** the second sealing lip (131, 133) is tapered in an end section (131.1, 133.1) abutting the cable (120).

4. Connector according to one of the preceding claims, **characterized in that** the sealing rib (132) comprises a sealing bead or a plurality of sealing beads (132.1, 132.2, 132.3, 132.4, 132.5, 132.6).

5. The connector according to any one of the preceding claims, **characterized in that** the sealing rib (132) is in abutment with the cable (120).

6. Connector according to one of the preceding claims, **characterized in that** the seal (130) comprises a second sealing rib (134), in particular wherein the second sealing rib (134) has a sealing bead or a plurality of sealing beads (134.1, 134.2, 134.3).

7. Connector according to any one of the preceding claims, **characterized in that** the seal (130) comprises a recess (135) into which a rib (113) of the housing (110) engages and/or **in that** the housing (110) comprises a recess (114) into which a sealing rib (134) of the seal (130) engages.

8. Plug connector according to claim 6 and claim 7, **characterized in that** the sealing rib (132) and the second sealing rib (134) delimit the recess (135) and bear against the rib (114) of the housing (110).

9. Connector according to any one of claims 1 to 8, **characterized in that** the protective cap (140) bears against the seal (130) in one region or in a plurality of regions.

## Revendications

1. Connecteur enfichable pour charger un véhicule électrique, avec un boîtier (110), qui délimite un espace intérieur (111) de boîtier, avec un câble (120), qui est guidé à travers une ouverture (112) du boîtier (110) dans l'espace intérieur (111) de boîtier, avec un joint d'étanchéité (130), qui est disposé entre le câble (120) et le boîtier (110) pour assurer l'étanchéité de l'espace intérieur (111) de boîtier, le joint d'étanchéité (130) comportant une lèvre d'étanchéité (131) entourant le câble (120) et reposant sur le câble (120), le joint d'étanchéité (130) comportant une nervure d'étanchéité (132) entourant le câble (120) et reposant sur le boîtier (110), et un capuchon de protection (140) étant prévu, qui recouvre le joint d'étanchéité (130), le capuchon de protection (140) étant relié au boîtier (110), **caractérisé en ce qu'**une ouverture de drainage (150) ou plusieurs d'ouvertures de drainage destinées à évacuer des liquides sont formées entre le capuchon de protection (140) et le joint (130).

2. Connecteur enfichable selon la revendication 1, **caractérisé en ce que** la lèvre d'étanchéité (131, 133) est rétrécie dans une section d'extrémité (131.1, 133.1) reposant sur le câble (120).

3. Connecteur enfichable selon l'une des revendications précédentes, **caractérisé en ce que** le joint d'étanchéité (130) comporte une deuxième lèvre d'étanchéité (131, 133), qui entoure le câble (120) et repose sur le câble (120), en particulier que la deuxième lèvre d'étanchéité (131, 133) est rétrécie dans une section d'extrémité (131.1, 133.1) reposant sur le câble (120).

4. Connecteur enfichable selon l'une des revendications précédentes, **caractérisé en ce que** la nervure d'étanchéité (132) a un bourrelet d'étanchéité ou plusieurs bourrelets d'étanchéité (132.1, 132.2, 132.3, 132.4, 132.5, 132.6).

5. Connecteur enfichable selon l'une des revendications précédentes, **caractérisé en ce que** la nervure d'étanchéité (132) repose sur le câble (120).

6. Connecteur enfichable selon l'une des revendications précédentes, **caractérisé en ce que** le joint d'étanchéité (130) comporte une deuxième nervure d'étanchéité (134), en particulier que la deuxième nervure d'étanchéité (134) comporte un bourrelet d'étanchéité ou plusieurs bourrelets d'étanchéité (134.1, 134.2, 134.3).

7. Connecteur enfichable selon l'une des revendications précédentes, **caractérisé en ce que** le joint d'étanchéité (130) a un évidement (135) avec lequel une nervure (113) du boîtier (110) vient en prise et/ou que le boîtier (110) a un évidement (114) avec lequel une nervure d'étanchéité (134) du joint d'étanchéité (130) vient en prise.

8. Connecteur enfichable selon la revendication 6 et la revendication 7, **caractérisé en ce que** la nervure d'étanchéité (132) et la deuxième nervure d'étanchéité (134) délimitent l'évidement (135) et reposent sur la nervure (114) du boîtier (110).

9. Connecteur enfichable selon l'une des revendications 1 à 8, **caractérisé en ce que** le capuchon de protection (140) repose sur le joint d'étanchéité (130) dans une zone ou plusieurs zones.
